# EUROPÄISCHE PATENTSCHRIFT

(11) **EP 2 427 792 B1**
(45) Veröffentlichungstag und Bekanntmachung des Hinweises auf die Patenterteilung: **06.03.2013**
(21) Anmeldenummer: 10719922.6
(22) Anmeldetag: 05.05.2010
(51) Int. Cl.: G02B 21/32, G01N 21/77, G01N 33/483, G21K 1/00, H05H 3/04

(54) **ANORDNUNG UND VERFAHREN ZUM BEWEGEN EINER MIKROSKOPISCHEN STRUKTUR**
ARRANGEMENT AND METHOD FOR MOVING A MICROSCOPIC STRUCTURE
DISPOSITIF ET PROCÉDÉ DE DÉPLACEMENT D'UNE STRUCTURE MICROSCOPIQUE

(30) Priorität: 05.05.2009 DE 102009020144
(43) Veröffentlichungstag der Anmeldung: 14.03.2012
(73) Patentinhaber: Fraunhofer-Gesellschaft zur Förderung der angewandten Forschung e.V., 80686 München (DE)
(72) Erfinder: HEIDRICH, Helmut, 12357 Berlin (DE); LÜTZOW, Peter, 10781 Berlin (DE)
(74) Vertreter: Pfenning, Meinig & Partner GbR
(86) Internationale Anmeldenummer: PCT/EP2010/002870
(87) Internationale Veröffentlichungsnummer: WO 2010/127879

(56) Entgegenhaltungen:
- WO-A2-2009/076323
- US-A1- 2005 162 656
- LEVY URIEL ET AL: "On-chip microfluidic tuning of an optical microring resonator" APPLIED PHYSICS LETTERS, AIP, AMERICAN INSTITUTE OF PHYSICS, MELVILLE, NY, US LNKD- DOI:10.1063/1.2182111, Bd. 88, Nr. 11, 14. März 2006 (2006-03-14) , Seiten 111107-111107, XP012080542 ISSN: 0003-6951
- SIYKA I SHOPOVA ET AL: "Highly sensitive tuning of coupled optical ring resonators by microfluidics" MICROFLUIDICS AND NANOFLUIDICS, SPRINGER, BERLIN, DE, Bd. 6, Nr. 3, 26. November 2008 (2008-11-26), Seiten 425-429, XP019667836 ISSN: 1613-4990
- KAWATA S ET AL: "Optically driven Mie particles in an evanescent field along a channeled waveguide" OPTICS LETTERS, OSA, OPTICAL SOCIETY OF AMERICA, WASHINGTON, DC, US, Bd. 21, Nr. 21, 1. November 1996 (1996-11-01), Seiten 1768-1770, XP002287992 ISSN: 0146-9592

## Beschreibung

Die Erfindung betrifft eine Anordnung zum Bewegen einer mikroskopischen Struktur nach dem Oberbegriff des Hauptanspruchs sowie ein Verfahren zum Bewegen einer mikroskopischen Struktur nach dem Oberbegriff des Nebenanspruchs.

Derartige Anordnungen weisen mindestens einen optischen Wellenleiter und mindestens eine Lichtquelle zum Einspeisen von zwei Lichtkomponenten einander entgegengesetzter Ausbreitungsrichtungen in den Wellenleiter auf zum Erzeugen einer stehenden Welle in dem Wellenleiter. Bei einem gattungsgemäßen Verfahren werden dementsprechend zwei Lichtkomponenten einander entgegengesetzter Ausbreitungsrichtungen in einen Wellenleiter eingespeist, wodurch eine stehende Welle erzeugt wird, wobei eine in Richtung eines Orts maximaler Feldstärke wirkende attraktive Kraft auf die mikroskopische Struktur ausgeübt wird.

Ein solche Anordnung und ein derartiges Verfahren sind z.B. in der Druckschrift EP 1 059 871 B1 gezeigt. Die dort beschriebene Anordnung dient dem Zweck, biologische Zellen, bei denen es sich um mikrometergroße dielektrische Teilchen handelt, einzufangen und zu strecken, damit Verformungen der Zellen unter einem Mikroskop beobachtet werden können. Mit dem bekannten Verfahren ist es also möglich, ein mikroskopisches Teilchen zu einem bestimmten Ort hin zu zwingen und dort zu halten, wobei dieses Einfangen jedoch nur möglich ist, wenn sich das Teilchen zuvor schon in einer unmittelbaren Umgebung des genannten Orts befindet.

Der vorliegenden Erfindung liegt die Aufgabe zugrunde eine Anordnung und ein Verfahren zu entwickeln, mit dem sich mikroskopische Strukturen kontrolliert bewegen lassen, so dass nicht nur ein Ort definierbar ist, zu dem hin die Struktur oder ein definierter Teil der Struktur bewegt werden soll, sondern auch ein zeitlicher Verlauf einer erzwungenen Bewegung der Struktur kontrollierbar ist.

Diese Aufgabe wird erfindungsgemäß gelöst durch eine Anordnung mit den kennzeichnenden Merkmalen des Hauptanspruchs in Verbindung mit den Merkmalen des Oberbegriffs des Hauptanspruchs sowie durch ein Verfahren mit den Merkmalen des Nebenanspruchs. Vorteilhafte Ausgestaltungen und Weiterentwicklungen ergeben sich mit den Merkmalen der Unteransprüche.

Zum Verschieben einer Lage eines Maximums der stehenden Welle, das zum Ausüben einer attraktiven Kraft auf die mikroskopische Struktur oder auf einen Teil der mikroskopischen Struktur geeignet ist, weist die erfindungsgemäße Anordnung Mittel zum Verändern einer relativen Phasenlage zwischen den beiden vorzugsweise monochromatischen Lichtkomponenten auf, wobei der mindestens eine zum Ausbilden einer stehenden Welle geeignete Wellenleiter in sich geschlossen ist. Dementsprechend sieht das vorgeschlagene Verfahren, das mit einer Anordnung hier beschriebener Art durchgeführt werden kann, vor, dass die stehende Welle in einem in sich geschlossenen Wellenleiter gebildet wird und eine Lage eines zwischen zwei Knoten gebildeten Maximums der stehenden Welle bewegt wird, indem eine relativen Phasenlage zwischen den beiden Lichtkomponenten verändert wird, wobei die mikroskopische Struktur bewegt wird, indem sie oder der genannte Teil der Struktur dem Maximum folgt.

Dadurch, dass die stehende Welle in einem in sich geschlossenen Wellenleiter gebildet wird, lässt sich aufgrund einer Resonatorverstärkung in vorteilhafter Weise eine stehende Welle ausgesprochen hoher Intensität mit vergleichsweise geringen Strahlungsleistungen der mindestens einen Lichtquelle erreichen. Die hohe Intensität erleichtert dabei entscheidend ein Einfangen und kontrolliertes Bewegen der Teilchen oder Strukturen. Der in sich geschlossene Wellenleiter kann insbesondere durch einen Ringresonator realisiert sein.

Die Erfindung macht sich dabei die Eigenschaft dielektrischer Teilchen oder Strukturen zunutze, in einem äußeren elektrischen Feldes ein induziertes Dipolmoment auszubilden, wodurch das Teilchen oder die Struktur oder ein dem Feld ausgesetzter Teil der Struktur wiederum eine in Richtung eines Feldgradienten wirkende, also zu einem Ort maximaler Feldstärke hin ziehende, Kraft erfährt. Dadurch, dass das genannte Maximum der stehenden Welle mit den vorgeschlagenen Maßnahmen nicht nur an einem definierten Ort erzeugt, sondern auch definiert bewegt werden kann, werden mit der Erfindung sehr genau kontrollierbare Bewegungen mikroskopischer Strukturen möglich, und zwar vorteilhafter Weise ohne dass elektrische Komponenten in einer Umgebung der zu bewegenden Struktur erforderlich wären. Damit werden die Anordnung und das Verfahren einsetzbar und anwendbar auch in kritischen Umgebungen, in denen Elektrizität störend oder gefährdend wirken könnte.

So lässt sich die vorgeschlagene Erfindung insbesondere in der Sensorik und für diagnostische Aufgaben in empfindlichen Umgebungen einsetzen. Dementsprechend kann die beschriebene Anordnung einen Sensor, beispielsweise zum Detektieren biologischer oder anderer Substanzen, oder einen Teil eines Sensors bilden oder einen Sensor umfassen. Bei der mikroskopischen Struktur kann es sich z.B. um mindestens ein zu analysierendes Teilchen handeln oder auch um ein mikromechanisches Element, das durch das Verfahren bewegt wird. Die mikroskopische Struktur oder der genannte Teil der Struktur bewegt sich dabei typischerweise in einem evaneszenten Feld des in sich geschlossenen Wellenleiters.

Bei typischen Ausführungen der Erfindung bildet die optische Anordnung ein mikrofluidisches System, das z.B. als Westentaschenlabor oder Chiplabor ("lab-ona-chip device") ausgeführt sein kann.

Wenn sie einen in unmittelbarer Umgebung des mindestens einen Wellenleiters geführten Kanal aufweist, kann die Anordnung zum Transportieren von dann die mikroskopische Struktur bildenden Teilchen dienen, indem sich ein evaneszenter Feldanteil der stehenden Welle mit dem Kanal überlappt und daher eine auf ein dort befindliches Teilchen wirkende Kraft induziert. Die Anordnung kann dann z.B. zum Untersuchen von Keimen oder Zellen oder anderen Teilchen verwendet werden, die durch Verschieben eines Maximums der stehenden Welle längs des Kanals transportiert werden und so beispielsweise einem sensitiven Bereich zugeführt oder aus einem solchen Bereich wegtransportiert werden können. Der sensitive Bereich kann dabei z.B. durch einen Abschnitt des genannten Kanals gegeben sein, in dem dieser ein Fenster aufweist oder eine sensitive Beschichtung trägt.

Bei anderen Ausführungen der Erfindung kann die Anordnung als durch Verschieben der Lage des Maximums bewegbare mikroskopische Struktur ein mikromechanisches Element, wie beispielsweise einen beweglichen Ausleger, ein Rad oder ein Ventil, aufweisen.

Die optische Anordnung weist mindestens einen Zuführungswellenleiter zum Einspeisen der beiden Lichtkomponenten in den in sich geschlossenen Wellenleiter auf. Zum Einspeisen der Lichtkomponenten oder einer der Lichtkomponenten kann der mindestens eine Zuführungswellenleiter so dicht an dem in sich geschlossenen Wellenleiter vorbeigeführt sein, dass die Lichtkomponenten durch ein Überkoppeln evaneszenter Felder in den in sich geschlossenen Wellenleiter eingekoppelt werden. Der Zuführungswellenleiter bildet dann mit einem dicht neben ihm herlaufenden Abschnitt des in sich geschlossenen Wellenleiters einen Richtkoppler.

Als stehende Welle im Sinne der vorliegenden Schrift sei eine Überlagerung zweier gegenläufiger Wellen selbstverständlich auch dann bezeichnet, wenn Knoten und Maxima dieser Welle nicht streng ortsfest bleiben, sofern eine Bewegung der Knoten und Maxima nur mit einer gegenüber einer Ausbreitungsgeschwindigkeit der Lichtkomponenten um Größenordnungen kleineren Geschwindigkeit erfolgt. Die für die Erfindung wesentliche Bewegung des Maximums kann besonders einfach dadurch erreicht werden, dass die genannten Mittel zum Verändern der relativen Phasenlage zwischen den beiden Lichtkomponenten durch einen Phasenmodulator realisiert sind. Dabei ist der Phasenmodulator in einem von zwei Lichtzuführungsabschnitten des Zuführungswellenleiters angeordnet.

Der Phasenmodulator, mit dem sich die an einer beliebigen Stelle im Verlauf des Wellenleiters definierbare relative Phasenlage zwischen den beiden Lichtkomponenten und damit der Ort des Maximums - das in aller Regel eines von einer Vielzahl gleichzeitig und gleichsinnig bewegter Maxima sein wird - verändern lässt, kann z.B. dadurch realisiert sein, dass in einer unmittelbaren Umgebung eines Abschnitts des Wellenleiters oder des Zuführungswellenleiters Elektroden angeordnet sind, mit denen sich dort ein elektrisches Feld erzeugen lässt, von dessen Stärke ein Brechungsindex innerhalb des genannten Abschnitts abhängt.

Bei der mindestens einen Lichtquelle wird es sich vorzugsweise um eine Laserlichtquelle handeln, mit der sich monochromatisches Licht hinreichend hoher Intensität problemlos erzeugen lässt. Das genannte Maximum der stehenden Welle kann besonders präzise an einem definierten Ort ausgebildet und bewegt werden, indem eine einzige Lichtquelle zum Erzeugen beider Lichtkomponenten verwendet wird, weil dadurch eine Kohärenz zwischen beiden Lichtkomponenten sichergestellt wird. Die Anordnung kann dazu einen Strahlteiler aufweisen, so dass die beiden Lichtkomponenten mittels des Strahlteilers aus zwei verschiedenen Richtungen in den mindestens einen Wellenleiter einspeisbar sind.

Wenn der mindestens eine Wellenleiter und gegebenenfalls vorzugsweise auch der mindestens eine Zuführungswellenleiter einmodig ausgeführt sind, können Laufzeitunterschiede zwischen verschiedenen Moden verhindert werden, was ein Erzeugen der stehenden Welle und eine kontrollierte Bewegung ihrer Maxima und Knoten erleichtert.

Ein besonders einfacher und vorteilhaft kompakter Aufbau der Anordnung ergibt sich, wenn sie ein planares Substrat aufweist, das den mindestens einen Wellenleiter trägt. Der genannte Wellenleiter und gegebenenfalls der oder die Zuführungswellenleiter können als Rippenwellenleiter oder als Schlitzwellenleiter oder durch Dotieren von als Wellenleiterkerne dienenden Bereichen des Substrats oder einer auf dem Substrat aufgebrachten Schicht realisiert werden. Das Substrat kann dabei z.B. aus Glas oder Silizium gebildet werden, wobei Silizium - sofern die Lichtquelle infrarotes Licht ausstrahlt - auch zur Bildung der Wellenleiterkerne verwendet werden kann. Die vorgeschlagene Anordnung, die eine optische Anordnung bildet oder umfasst, kann also insbesondere als Planarwellenleiterstruktur ausgeführt sein.

Ausführungsbeispiele der Erfindung werden nachfolgend anhand der Figuren 1 bis 4 erläutert. Es zeigen
- Fig. 1: eine schematisch dargestellte Aufsicht auf einen Ausschnitt einer optischen Anordnung zum Bewegen dielektrischer Teilchen,
- Fig. 2: eine Veranschaulichung eines Teilchentransports mittels einer Anordnung der in Fig. 1 gezeigten Art,
- Fig. 3: eine Aufsicht auf einen Ausschnitt einer anders ausgeführten optischen Anordnung ähnlicher Art und
- Fig. 4: in einer der Fig. 1 entsprechenden Darstellung eine optischen Anordnung, die ein kontrolliert bewegbares mikromechanisches Element aufweist.

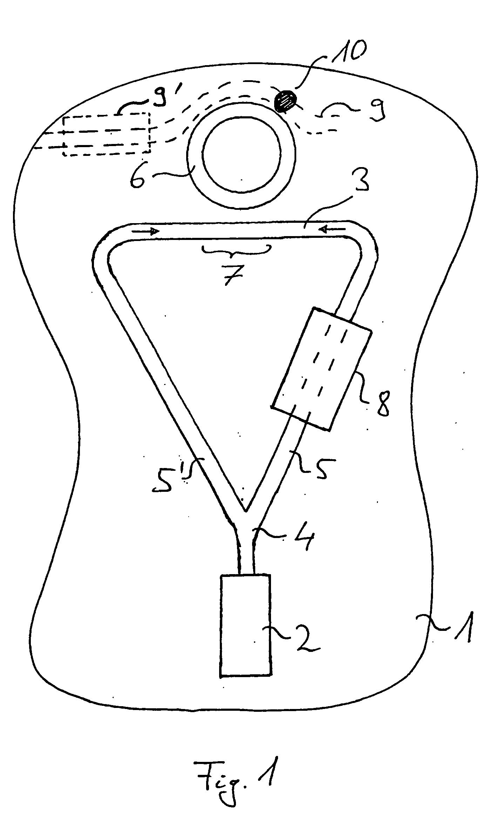

Die in Figur 1 gezeigte optische Anordnung ist auf einem nur ausschnittsweise gezeigten planaren Substrat 1 aufgebaut, das z.B. aus Glas oder Silizium gebildet sein kann, und bildet so eine integrierte optische Schaltung. Sie weist eine durch einen Laser gegebene Lichtquelle 2 auf, die in Figur 1 auf dem Substrat 1 dargestellt ist, die aber auch extern angeordnet und über eine Lichtleitfaser eingekoppelt sein kann.

Mit der Lichtquelle 2 kann monochromatisches Licht - beispielsweise IR-Licht - in einen auf dem Substrat 1 angeordneten Zuführungswellenleiter 3 eingespeist werden, und zwar derart, dass zwei Lichtkomponenten entgegengesetzter Ausbreitungsrichtung durch den Zuführungswellenleiter propagieren, die beide von der Lichtquelle 2 ausgehen. Dazu ist in Lichtausbreitungsrichtung hinter der Lichtquelle 2 ein Strahlteiler 4 mit zwei Ausgängen angeordnet, wobei jeder dieser Ausgänge mit einem von zwei Lichtzuführungsabschnitten 5 und 5' an einander gegenüberliegenden Enden des Zuführungswellenleiters 3 verbunden ist.

Die Anordnung weist ferner einen in sich geschlossenen Wellenleiter 6 auf, der einen Ringresonator bildet und der so dicht an dem Zuführungswellenleiter 3 vorbeigeführt ist, dass Anteile beider zuvor genannter Lichtkomponenten in den Wellenleiter 6 überkoppeln, weil sich evaneszente Felder des Zuführungswellenleiters 3 und des den Ringresonator bildenden Wellenleiters 6 überlappen. In einem Bereich einer Koppelstrecke 7 bilden der Zuführungswellenleiter 3 und der Wellenleiter 6 also einen Richtkoppler. Dabei sind sowohl der Zuführungswellenleiter 3 als auch der in sich geschlossene Wellenleiter 6, die z.B. als Rippenwellenleiter - mit einem beispielsweise aus Silizium gebildeten Wellenleiterkern - oder als Schlitzwellenleiter oder durch Dotierung des Substrats 1 oder einer auf dem Substrat 1 aufgebrachten Schicht realisiert sein können, einmodig ausgeführt.

Der durch den Wellenleiter 6 gebildete Ringresonator ist abhängig von einer Wellenlänge des von der Lichtquelle 2 erzeugten Lichts so dimensioniert, dass sich durch das Überkoppeln beider gegensinnig propagierender Lichtkomponenten eine stehende Welle im Wellenleiter 6 ausbildet. Dabei ist ein geringster Abstand zwischen dem Zuführungswellenleiter 3 und dem Wellenleiter 6 im Bereich der Koppelstrecke 7 so gewählt, dass die stehende Welle eine gemessen an einer Ausgangsleistung der Lichtquelle 2 ausgesprochen hohe Intensität hat.

In einem der beiden Lichtzuführungsabschnitte 5 und 5', nämlich in dem in Figur 1 rechts gezeigten Lichtzuführungsabschnitt 5, ist ein Phasenmodulator 8 angeordnet, der z.B. dadurch realisiert sein kann, dass Elektroden in einer unmittelbaren Umgebung des Zuführungswellenleiters 3 angeordnet sind, mit denen sich dort ein elektrisches Feld erzeugen und so lokal ein Brechungsindex des Zuführungswellenleiters 3 verändern und einstellen lässt. Durch Verstellen dieses Phasenmodulators 8 kann eine relative Phase zwischen den beiden Lichtkomponenten verändert werden, was wiederum ein Verschieben eine Lage von Maxima und Knoten der stehenden Welle im Wellenleiter 6 zur Folge hat.

Bei der in Figur 1 gezeigten Anordnung handelt es sich um ein mikrofluidisches System, beispielsweise um einen Sensor zum Detektieren bestimmter Teilchen innerhalb einer Flüssigkeit oder um einen Teil eines solchen Sensors, wobei dieses System, das als sogenanntes Chiplabor oder "lab-on-a-chip device" (LOC) ausgeführt ist, insbesondere einen Kanal 9 für zu transportierende - und beispielsweise für diagnostische Zwecke zu analysierende - mikroskopische Teilchen, wie beispielsweise Zellen, Viren oder Biomoleküle, aufweist, der in unmittelbarer Nähe des den Ringresonator bildenden Wellenleiters 6 geführt ist. Ein solches Teilchen 10, das dielektrische Eigenschaften hat und beispielsweise ein Mikro- oder Nanopartikel - typischerweise mit Durchmessern von zwischen einigen 10 nm und 1 µm - sein kann, ist in Figur 1 dargestellt. Bei dem Teilchen 10 kann es sich insbesondere um einen zu analysierenden Keim oder eine zu analysierende Zelle handeln. Der Kanal 9 wiederum kann dazu in einem sensitiven Bereich 9' z.B. ein Fenster aufweisen oder mit einer sensitiven Beschichtung versehen sein, dem des Teilchen 10 in Kontrolierter Weise zugeführt und von dem es auch weggeführt werden kann.

Aufgrund einer durch Dipolinduzierung in elektrischen Feldern auf dielektrische Partikel ausgeübten Kraft, die in Richtung eines Feldstärkegradienten wirkt, wird das Teilchen 10 zu einem Maximum der im Wellenleiter 6 ausgebildeten stehenden Welle gezogen. Durch das Verändern der relativen Phasenlage zwischen den Lichtkomponenten und die dadurch bewirkte Verschiebung der Knoten und der Maxima, wandert das immer im Maximum oder in größtmöglicher Nähe zum Maximum gehaltene Teilchen 10 nun in durch entsprechende Ansteuerung des Phasenmodulators 8 genau kontrollierbarer Weise an dem Wellenleiter 6 entlang.

Der Phasenmodulator 8 kann - mittels einer nicht eigens abgebildeten Steuereinheit - z.B. mit einem sägezahnförmigen Signal derart angesteuert werden, dass er auf einen Ausgangszustand zurückspringt, wenn eine Phasenverschiebung um ein ganzzahliges Vielfaches von 2π erreicht ist. Dann kann das Teilchen 10 in beschriebener Weise über Strecken transportiert werden, die einem Vielfachen der beispielsweise etwa 1,5 µm betragenden Wellenlänge des Lichts entsprechen. Ein derartiger Teilchentransport kann z.B. dazu dienen, einzelne Teilchen einem Sensorbereich zuzuführen, beispielsweise für biologische Untersuchungen. Dabei können selbstverständlich auch eine Vielzahl von Teilchen transportiert werden, beispielsweise hintereinander derart, dass in jedem von mehreren räumlich aufeinander folgenden Maxima der stehenden Welle ein Teilchen gefangen ist.

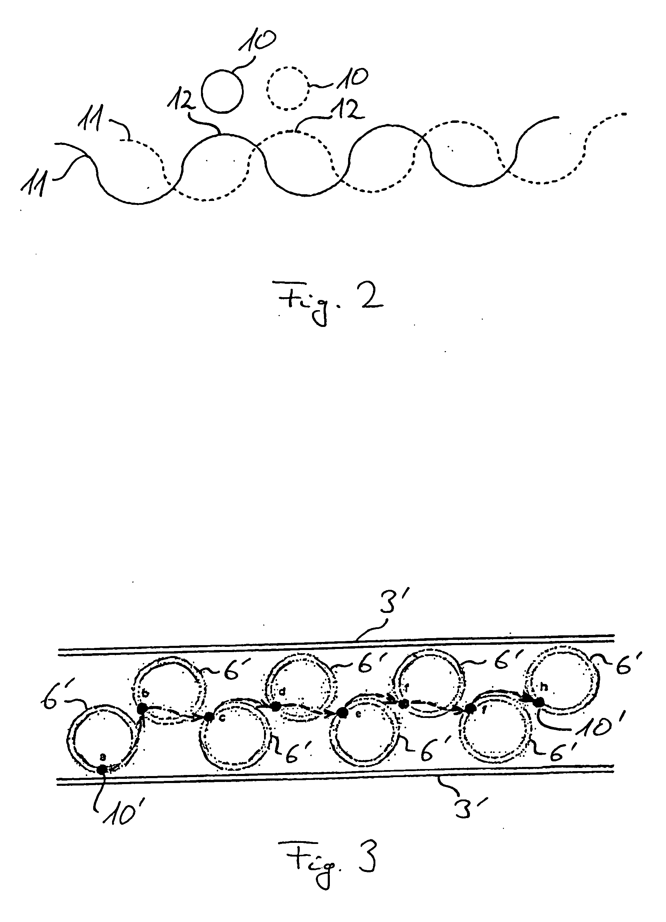

Figur 2 veranschaulicht den beschriebenen Teilchentransport, indem das Teilchen 10 dort zusammen mit einem Amplitudenverlauf 11 der stehenden Welle dargestellt ist, und zwar einmal mit durchgezogenen Linien und einmal mit gestrichelten Linien, die einen Zustand zu einem späteren Zeitpunkt beschreiben, zu dem ein Maximum 12 der stehenden Welle weitergewandert ist, wobei das Teilchen 10 aufgrund des beschriebenen Effekts immer in größtmöglicher Nähe zu dem Maximum 12 bleibt.

In Figur 3 ist eine nur teilweise abgebildete Abwandlung der beschriebenen optischen Anordnung aus Figur 1 gezeigt. Bei dieser Abwandlung ist eine Vielzahl in sich geschlossener Wellenleiter 6' vorgesehen, die jeweils einen Ringresonator bilden und in die mittels zweier Zuführungswellenleiter 3' in beschriebener Weise stehende Wellen eingespeist werden. Maxima und Minima (gemeint sind immer Amplitudenmaxima und - minima) dieser stehenden Wellen können mit einem diesmal nicht abgebildeten Phasenmodulator verschoben werden, der in einem Lichtzuführungsabschnitt der Zuführungswellenleiter 3' angeordnet ist, so dass ein Teilchen 10' längs eines Weges transportiert werden kann, der in Figur 3 durch die Folge der Buchstaben a bis h angedeutet ist.

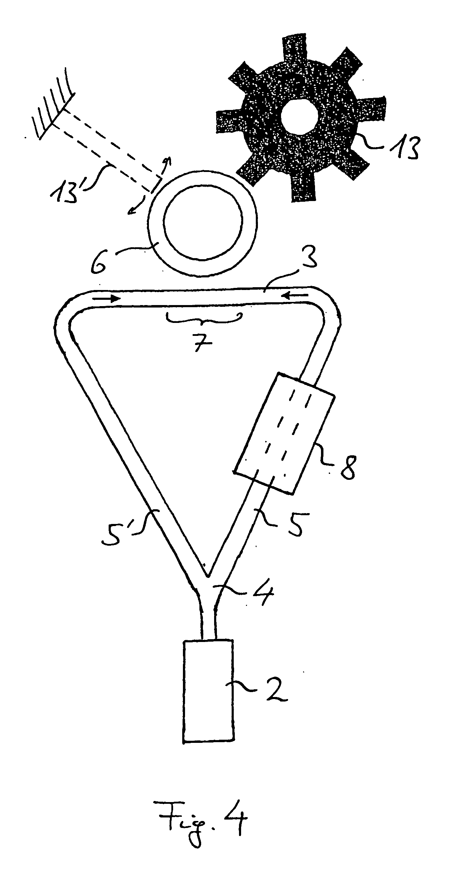

Ein weiteres Ausführungsbeispiel, das in vielen Details der Anordnung aus Figur 1 entspricht, ist in Figur 4 dargestellt. Wiederkehrende Merkmale sind mit den gleichen Bezugszeichen gekennzeichnet. Als mikroskopische Struktur, die sich durch Verschieben der Maxima der stehenden Welle im Wellenleiter 6 bewegen lässt, ist bei der Anordnung aus Figur 4 ein mikromechanisches Element vorgesehen, das hier als Rad 13 mit Zähnen dargestellt ist, wobei die Zähne so gestaltet sind, dass sich immer mindestens ein Zahn in unmittelbarer Nähe des Wellenleiters 6 befindet und mit einem evaneszenten Feld des Wellenleiters 6 überlappt, so dass die vorhin im Zusammenhang mit dem Teilchen 10 beschriebene Kraft hier auf den jeweiligen Zahn des Rades 13 wirkt. Ein Abstand zwischen benachbarten Zähnen des Rades 13 entspricht dabei vorzugsweise der halben Wellenlänge des Lichts - das Rad 13 selbst kann selbstverständlich auch deutlich größer sein, als es die insofern nicht maßstabsgetreue Darstellung vermuten lässt. Durch Verstellen des Phasenmodulators 8 kann hier das Rad 13 gedreht werden. Das Rad 13 könnte z.B. zum Bewegen eines Ventils verwendet werden oder auch direkt durch ein Stellglied eines Ventils ersetzt sein. Bei einer weiteren Abwandlung ist als mikromechanisches Element stattdessen ein in Figur 4 gestrichelt dargestellter Cantilever oder Ausleger 13' vorgesehen, der in beschriebener Weise bewegbar ist und z.B. durch periodisches Ansteuern des Phasenmodulators 8 in Schwingung versetzt werden kann. Wenn der Ausleger 13' eine selektive Oberflächenbeschichtung aufweist, an der ein zu detektierender Stoff bevorzugt anlagert, kann dieser Stoff z.B. durch eine Veränderung einer mechanischen Resonanzfrequenz nachgewiesen werden. Eine Schwingungsamplitude des Auslegers 13' könnte dazu wiederum optisch ausgelesen werden.

## Patentansprüche

1. Anordnung zum Bewegen einer mikroskopischen Struktur, umfassend mindestens einen optischen Wellenleiter (6; 6') und eine Lichtquelle (2) zum Einspeisen von zwei durch dieselbe Lichtquelle (2) erzeugbaren Lichtkomponenten einander entgegengesetzter Ausbreitungsrichtungen in den Wellenleiter (6; 6') zum Erzeugen einer stehenden Welle im Wellenleiter (6; 6'),
**dadurch gekennzeichnet,**
**dass** der mindestens eine Wellenleiter (6; 6') in sich geschlossen ist und die Anordnung zusätzlich mindestens einen Zuführungswellenleiter (3; 3') zum Einspeisen der beiden Lichtkomponenten in den in sich geschlossenen Wellenleiter (6; 6') aufweist, wobei die Vorrichtung zum Verschieben einer Lage eines Maximums (12) der stehenden Welle, das zum Ausüben einer attraktiven Kraft auf die mikroskopische Struktur oder auf einen Teil der mikroskopischen Struktur geeignet ist, einen Phasenmodulator (8) als Mittel zum Verändern einer relativen Phasenlage zwischen den beiden Lichtkomponenten aufweist, wobei der Phasenmodulator (8) in einem von zwei Lichtzuführungsabschnitten (5, 5') des Zuführungswellenleiters (3; 3') angeordnet ist.

2. Anordnung nach Anspruch 1, **dadurch gekennzeichnet, dass** sie
einen in unmittelbarer Umgebung des mindestens einen Wellenleiters (6; 6') geführten Kanal (9) zum Transportieren von die mikroskopische Struktur bildenden Teilchen (10; 10') oder
ein die mikroskopische Struktur bildendes und durch Verschieben der Lage des Maximums (12) bewegbares, vorzugsweise durch einen beweglichen Ausleger (13') oder ein Rad (13) oder ein Ventil gegebenes mikromechanisches Element aufweist.

3. Anordnung nach einem der Ansprüche 1 oder 2, **dadurch gekennzeichnet, dass** sie ein mikrofluidisches System bildet und/oder als Chiplabor ausgeführt ist.

4. Anordnung nach einem der Ansprüche 1 bis 3, **dadurch gekennzeichnet, dass** sie einen Sensor oder einen Teil eines Sensors bildet oder einen Sensor umfasst.

5. Anordnung nach Anspruch 1 bis 4, **dadurch gekennzeichnet, dass** der mindestens eine Zuführungswellenleiter (3; 3') so dicht an dem in sich geschlossenen Wellenleiter (6; 6') vorbeigeführt ist, dass die Lichtkomponenten durch ein Überkoppeln evaneszenter Felder in den in sich geschlossenen Wellenleiter (6; 6') einspeisbar sind.

6. Anordnung nach einem der Ansprüche 1 bis 5, **dadurch gekennzeichnet, dass** der in sich geschlossene Wellenleiter (6; 6') einen Ringresonator bildet.

7. Anordnung nach einem der Ansprüche 1 bis 6, **dadurch gekennzeichnet, dass** es sich bei der mindestens einen Lichtquelle (2) um eine Laserlichtquelle handelt.

8. Anordnung nach einem der Ansprüche 1 bis 7, **dadurch gekennzeichnet, dass** die Anordnung einen Strahlteiler (4) aufweist und beide Lichtkomponenten mittels des Strahlteilers (4) aus zwei verschiedenen Richtungen in den mindestens einen Wellenleiter (6; 6') einspeisbar sind.

9. Anordnung nach einem der Ansprüche 1 bis 8, **dadurch gekennzeichnet, dass** sie ein planares Substrat (1) aufweist, das den mindestens einen Wellenleiter (6; 6') trägt.

10. Anordnung nach einem der Ansprüche 1 bis 9, **dadurch gekennzeichnet, dass** der mindestens eine Wellenleiter (6; 6') einmodig ausgeführt ist.

11. Verfahren zum Bewegen einer mikroskopischen Struktur mittels einer Vorrichtung nach einem der Ansprüche 1 bis 10, bei dem
eine stehende Welle in dem in sich geschlossenen optischen Wellenleiter (6; 6') erzeugt wird, indem zwei Lichtkomponenten einander entgegengesetzter Ausbreitungsrichtungen in den Wellenleiter (6; 6') eingespeist werden,
wodurch eine in Richtung eines Orts maximaler Feldstärke wirkende attraktive Kraft auf die mikroskopische Struktur oder auf einen Teil der mikroskopischen Struktur ausgeübt wird,
wobei eine Lage eines zwischen zwei Knoten gebildeten Maximums (12) der stehenden Welle bewegt wird, indem eine relativen Phasenlage zwischen den beiden Lichtkomponenten durch den Phasenmodulator (8) verändert wird, der in einem von zwei Lichtzuführungsabschnitten (5, 5') des Zuführungswellenleiters (3; 3') angeordnet ist,
und wobei die mikroskopische Struktur bewegt wird, indem sie oder der genannte Teil der Struktur dem Maximum (12) folgt.

12. Verfahren nach Anspruch 11, **dadurch gekennzeichnet, dass** die stehende Welle in einem Ringresonator gebildet wird.

13. Verfahren nach einem der Ansprüche 11 oder 12, **dadurch gekennzeichnet, dass** es sich bei der mikroskopischen Struktur um mindestens ein zu analysierendes Teilchen (10; 10') oder um ein mikromechanisches Element handelt, das durch das Verfahren bewegt wird.

14. Verfahren nach Anspruch 13, **dadurch gekennzeichnet, dass** das Teilchen (10; 10') dadurch einem sensitiven Bereich (9') eines das Teilchen (10; 10') führenden Kanals (9) zugeführt und/oder von einem sensitiven Bereich (9') eines das Teilchen (10; 10') führenden Kanals (9) weggeführt wird.

15. Verfahren nach einem der Ansprüche 11 bis 14, **dadurch gekennzeichnet, dass** die so bewegte mikroskopische Struktur mindestens ein Keim oder mindestens eine Zelle ist.

## Claims

1. Arrangement for moving a microscopic structure, comprising at least one optical waveguide (6; 6') and a light source (2) for feeding two light components, generable by the same light source (2) and of mutually opposed propagation directions, into the waveguide (6; 6') in order to produce a standing wave in the waveguide (6; 6'),
**characterised in that** the at least one waveguide (6; 6') is closed upon itself and the arrangement additionally has at least one supply waveguide (3; 3') for feeding the two light components into the waveguide (6; 6') closed upon itself, the device for displacing a position of a maximum (12) of the standing wave, which maximum is suitable for exerting an attractive force on the microscopic structure or on a part of the microscopic structure, having a phase modulator (8) as means for changing a relative phase position between the two light components, the phase modulator (8) being arranged in one of two light supply sections (5, 5') of the supply waveguide (3; 3').

2. Arrangement according to Claim 1, **characterised in that** it has
a channel (9) which is routed in the immediate vicinity of the at least one waveguide (6; 6') and serves to transport particles (10; 10') forming the microscopic structure or
a micromechanical element forming the microscopic structure and movable by displacement of the position of the maximum (12), and preferably constituted by a movable arm (13') or a wheel (13) or a valve.

3. Arrangement according to one of Claims 1 or 2, **characterised in that** it forms a microfluidic system and/or is embodied as a chip laboratory.

4. Arrangement according to one of Claims 1 to 3, **characterised in that** it forms a sensor or a part of a sensor or comprises a sensor.

5. Arrangement according to Claim 1 to 4, **characterised in that** the at least one supply waveguide (3; 3') is routed so closely past the waveguide (6; 6') closed upon itself that the light components are feedable into the waveguide (6; 6') closed upon itself by transmission of evanescent fields.

6. Arrangement according to one of Claims 1 to 5, **characterised in that** the waveguide (6; 6') closed upon itself forms a ring resonator.

7. Arrangement according to one of Claims 1 to 6, **characterised in that** the at least one light source (2) is a laser light source.

8. Arrangement according to one of Claims 1 to 7, **characterised in that** the arrangement has a beam splitter (4) and both light components are feedable by means of the beam splitter (4) from two different directions into the at least one waveguide (6; 6').

9. Arrangement according to one of Claims 1 to 8, **characterised in that** it has a planar substrate (1) which carries the at least one waveguide (6; 6').

10. Arrangement according to one of Claims 1 to 9, **characterised in that** the at least one waveguide (6; 6') is of single-mode design.

11. Method for moving a microscopic structure by means of a device according to one of Claims 1 to 10, in which
a standing wave is generated in the optical waveguide (6; 6') closed upon itself by feeding two light components of mutually opposed propagation directions into the waveguide (6; 6'),
whereby an attractive force acting in the direction of a location of maximum field strength is exerted on the microscopic structure or on a part of the microscopic structure,
a position of a maximum (12), formed between two nodes, of the standing wave being moved by changing a relative phase position between the two light components by means of the phase modulator (8), which is arranged in one of two light supply sections (5, 5') of the supply waveguide (3; 3'),
and the microscopic structure being moved by said structure or said part of the structure following the maximum (12).

12. Method according to Claim 11, **characterised in that** the standing wave is formed in a ring resonator.

13. Method according to one of Claims 11 or 12, **characterised in that** the microscopic structure is at least one particle (10; 10') to be analysed or a micromechanical element, which is moved by the method.

14. Method according to Claim 13, **characterised in that** the particle (10; 10') is thereby led to a sensitive region (9') of a channel (9) guiding the particle (10; 10') and/or led away from a sensitive region (9') of a channel (9) guiding the particle (10; 10').

15. Method according to one of Claims 11 to 14, **characterised in that** the microscopic structure thus moved is at least one germ or at least one cell.

## Revendications

1. Agencement pour le déplacement d'une structure microscopique, comportant au moins un guide d'onde optique (6 ; 6') et une source lumineuse (2) pour injecter deux composants lumineux pouvant être générés par la même source lumineuse (2) dans des directions de propagation opposées dans le guide d'onde (6 ; 6') afin de générer une onde stationnaire dans le guide d'onde (6 ; 6'),
**caractérisé en ce que** le au moins un guide d'onde (6 ; 6') est fermé en soi et l'agencement présente en outre au moins un guide d'onde d'alimentation (3 ; 3') pour injecter les deux composants lumineux dans le guide d'onde (6 ; 6') fermé en soi, dans lequel le dispositif, afin de déplacer une position d'un maximum (12) de l'onde stationnaire, lequel maximum est adapté pour exercer une force d'attraction sur la structure microscopique ou sur une partie de la structure microscopique, présente un modulateur de phases (8) formant un moyen pour modifier une position de phase relative entre les deux composants lumineux, dans lequel le modulateur de phases (8) est agencé dans l'une des deux sections d'alimentation en lumière (5 ; 5') du guide d'onde d'alimentation (3 ; 3').

2. Agencement selon la revendication 1, **caractérisé en ce qu'**il présente
un conduit (9), mené dans l'environnement immédiat du au moins un guide d'onde (6 ; 6') et destiné à transporter les particules (10 ; 10') formant la structure microscopique, ou
un élément micromécanique formant la structure microscopique et pouvant être déplacé sous l'effet du déplacement de la position du maximum (12), de préférence via un bras (13') mobile ou une roue (13) ou une soupape.

3. Agencement selon l'une quelconque des revendications 1 ou 2, **caractérisé en ce qu'**il forme un système microfluidique et/ou est réalisé sous la forme d'un laboratoire sur puce.

4. Agencement selon l'une quelconque des revendications 1 à 3, **caractérisé en ce qu'**il forme un capteur ou une partie d'un capteur ou comporte un capteur.

5. Agencement selon la revendication 1 à 4, **caractérisé en ce que** le au moins un guide d'onde d'alimentation (3 ; 3') est si étroitement passé le long du guide d'onde (6 ; 6') fermé en soi que les composants lumineux peuvent être injectés via un surcouplage des champs évanescents dans le guide d'onde (6 ; 6') fermé en soi.

6. Agencement selon l'une quelconque des revendications 1 à 5, **caractérisé en ce que** le guide d'onde (6 ; 6') fermé en soi forme un résonateur en anneau.

7. Agencement selon l'une quelconque des revendications 1 à 6, **caractérisé en ce que** la au moins une source lumineuse (2) est une source lumineuse à laser.

8. Agencement selon l'une quelconque des revendications 1 à 7, **caractérisé en ce que** l'agencement présente un diviseur de faisceau (4) et les deux composants lumineux peuvent être injectés dans le au moins un guide d'onde (6 ; 6') à partir de deux directions différentes au moyen du diviseur de faisceau (4).

9. Agencement selon l'une quelconque des revendications 1 à 8, **caractérisé en ce qu'**il présente un substrat (1) planaire qui porte le au moins un guide d'onde (6 ; 6').

10. Agencement selon l'une quelconque des revendications 1 à 9, **caractérisé en ce que** le au moins un guide d'onde (6 ; 6') est réalisé de manière monomode.

11. Procédé pour le déplacement d'une structure microscopique au moyen d'un dispositif selon l'une quelconque des revendications 1 à 10, selon lequel
une onde stationnaire est générée dans le guide d'onde optique (6 ; 6') fermé en soi, du fait que deux composants lumineux sont injectés dans des directions de propagation opposées dans le guide d'onde (6 ; 6'),
moyennant quoi une force d'attraction, agissant en direction d'un lieu avec une intensité de champ maximale, est exercée sur la structure microscopique ou sur une partie de la structure microscopique,
dans lequel une position d'un maximum (12) formé entre deux noeuds de l'onde stationnaire est déplacée du fait qu'une position de phase relative entre les deux composants lumineux est modifiée par le modulateur de phase (8), qui est agencé dans l'une des deux sections d'alimentation en lumière (5 ; 5') du guide d'onde d'alimentation (3 ; 3'),
et dans lequel la structure microscopique est déplacée du fait qu'elle ou ladite partie de la structure suit le maximum (12).

12. Procédé selon la revendication 11, **caractérisé en ce que** l'onde stationnaire est formée dans un résonateur en anneau.

13. Procédé selon la revendication 11 ou 12, **caractérisé en ce que** la structure microscopique est au moins une particule (10 ; 10') à analyser ou un élément micromécanique qui est déplacé via le procédé.

14. Procédé selon la revendication 13, **caractérisé en ce que** la particule (10 ; 10') est acheminée à travers une zone sensitive (9') d'un conduit (9) guidant la particule (10 ; 10') et/ou est éloignée d'une zone sensitive (9') d'un conduit (9) guidant la particule (10 ; 10').

15. Procédé selon l'une quelconque des revendications 11 à 14, **caractérisé en ce que** la structure microscopique ainsi déplacée est au moins un germe ou au moins une cellule.
